# EUROPEAN PATENT SPECIFICATION

(11) **EP 3 976 466 B1**
(45) Date of publication and mention of the grant of the patent: **05.07.2023**
(21) Application number: 20730995.6
(22) Date of filing: 26.05.2020
(51) Int. Cl.: B64C 3/28, B64D 45/00

(54) **LEADING-EDGE COMPONENT FOR AN AIRCRAFT**
VORDERKANTENKOMPONENTE FÜR EIN FLUGZEUG
COMPOSANTE DE BORD D'ATTAQUE POUR AÉRONEF

(30) Priority: 28.05.2019 DE 102019114222
(43) Date of publication of application: 06.04.2022
(73) Proprietor: Airbus Operations GmbH, 21129 Hamburg (DE)
(72) Inventor: BENSMANN, Stefan, 21129 Hamburg (DE); FEES, Martin, 21129 Hamburg (DE)
(74) Representative: LKGLOBAL Lorenz & Kopf Patentanwalt Attorney at Law PartG mbB
(86) International application number: PCT/EP2020/064599
(87) International publication number: WO 2020/239780

(56) References cited:
- EP-A1- 3 248 864
- DE-U1- 20 013 249
- US-A1- 2010 148 007
- US-A1- 2018 297 713

## Description

### TECHNICAL FIELD

The invention relates to a wing leading-edge component, a wing having a fixed wing body and a wing leading-edge component, as well as an aircraft.

### BACKGROUND OF THE INVENTION

Aerodynamic components of an aircraft are designed to meet several aerodynamic requirements of the respective aircraft, which lead to a certain shape exposed to an airflow. For optimizing the weight of the aircraft, usually hollow structures are used, which are stiffened by an interior structure. For example, a leading edge of a flow body used in a commercial aircraft may comprise a skin and ribs attached to an interior side of the skin.

Besides the aerodynamic and weight requirements, also bird strike is a sizing scenario for leading-edge regions of a flow body of an aircraft. For example, it is known to provide a reinforcing panel structure on the leading-edge region to withstand impact to a great extent. A rupture of an outer skin of a flow body in the leading-edge region due to an impact should be avoided. For example, EP 3 318 481 A1 shows a panel structure for an aircraft having an improved impact resistance.

EP 3 248 864 A1 discloses an aerodynamic surface for an aircraft comprising a torsion box having a front spar, and a composite leading edge section that comprises an outer surface shaped with an aerodynamic leading edge profile, an inner surface internally arranged with respect to the outer surface, and a blanket spanwise arranged between the outermost point of the inner surface and the front spar.

US 2018/297713 A1 discloses an energy absorbing arrangement having an inner barrel comprising a centerline axis, an outer barrel, a webbing extending between the outer barrel and the inner barrel and configured to be offset from a nose lip by a distance, the webbing being folded together to form a plurality of folds, the plurality of folds being stitched together via a plurality of stitches, wherein the webbing is configured to absorb energy from an object in response to the object passing through the nose lip and applying a force to the webbing.

DE 200 13 249 U1 discloses an airfoil having a wing shell with at least one inner spar, wherein a flexible, net-like textile structure is applied inside the wing shell in front of the spar, which structure is stretchable at least in sections in an energy-absorbing manner when a foreign body penetrates in order to change the direction of movement and/or the speed of the foreign body.

### SUMMARY OF THE INVENTION

It is an object of the invention to provide an alternate leading-edge component, which has improved impact characteristics for deformation control of a skin panel that is stiffened by an interior structure.

The object is met by a leading-edge component for an aircraft having the features of independent claim 1. Advantageous embodiments and further improvements can be gathered from the subclaims and the following description.

A leading-edge component for an aircraft is proposed, the component comprising at least a part of a flow body having a front skin, a hollow space at least partially delimited by the front skin and at least one separate retention device, wherein the at least one retention device comprises a flexible structure with a mesh, a web, a fabric or a plurality of strings, wherein the retention device is arranged behind the front skin in a distance thereto and extends along a main extension direction of at least a section of the front skin, and wherein the retention device is designed for retaining the front skin that deforms to move into the hollow space upon an impact of a foreign object.

The leading-edge component can be any component that is capable of being arranged at a leading edge of an aircraft. For example, it may be a fixed leading-edge component as a part of a wing, of a horizontal tail plane or of a vertical tail plane. However, it may also be a movable component, such as a leading-edge slat or similar, which is designed to move relative to a fixed part of the aircraft.

In the context of the invention, the flow body may be considered an aerodynamic body that has a leading edge, which is exposable to an air flow and which is designed according to the invention. Hence, the leading-edge component may comprise a part of the flow body, such as a part of a fixed leading edge of a wing, or it comprises the whole flow body, such as a movable surface exposed to an airflow.

The front skin may be based on a surface-like component that in some cases comprises a significant curvature about a spanwise axis to form an aerodynamically advantageous leading-edge region. For example, the front skin is curved about significantly more than 45°, for example at least 90°. In the course of this curvature, a leading edge separates a bottom section and a top section. The leading edge is a line that may be close to a stagnation point in a certain flight state, such as the cruise flight. A region above and below the leading edge may be prone to collisions with foreign objects, such as birds.

The flow body comprises a hollow space behind the front skin for achieving a low weight. Upon impact of a foreign object, the front skin deforms into the hollow space. The actual type of deformation depends on numerous parameters, which may include but are not limited to the impact angle, the impact velocity, the weight of the object, the impact position, geometry of the flow body, material, layout of a stiffening structure and other interior components, assembly setup and used bonding methods, and so on. It is possible that the front skin deforms in the form of an inward bulge, or in form of a rupture, such that a section of the front skin is bent or folded inwardly.

In the hollow space also a stiffening arrangement may be placed, which may include ribs that extend in a substantially chordwise direction, stringers that extend in a substantially spanwise direction along an interior side of the front skin and spars that substantially follow a spanwise extension in a distance to the leading edge. The deformation of the front skin may depend on a distance of the actual impact position and neighboring ribs. If the impact is very close to a rib, a high shearing stress can be generated, which leads to a rupture along a rib contour. If the impact position is at a further distance to the neighboring ribs, the deformation may also include a significant inward bulge.

By providing the at least one retention device an inwardly deforming front skin may be retained. By this, several advantages are achieved. Directly after the impact, the top skin behaves as usual and deforms by bulging inwardly and/or by receiving a rupture. However, when deforming into the hollow space, the deforming part of the front skin reaches the retention device and gets retained. Due to its flexible structure the retention device quickly adapts to the impact deformation and leads the impact-induced forces into a structure of the flow body, to which it is attached. Furthermore, the creation of ruptures does not lead to tearing out fractions of the front skin that fold away in a way that the impinging object can completely enter the hollow space. Instead, a torn out front skin section is retained by the retaining device in a preferably small distance to the leading edge. Thus, the front skin may absorb even more kinetic energy, since occurring ruptures grow in a lateral direction, while the front skin continues to deform.

The material of the retention device is preferably selected to cope with a maximum impact load to be considered in order to avoid the object or torn out front skin sections to completely enter the hollow space. The material may be based on fibers having a high tensile strength, which are woven, braided or otherwise interleaved. The material may also comprise a sufficient impact resistance. If, for example, the material is too brittle it could break even if it has a high tensile strength. Also, a high cutting resistance is beneficial. A torn out fraction of the front skin may comprise sharp edges, which should not harm the retention device. During the retention and due to the flexibility of the material, the impact load is mainly transformed into a tensile force. Also, the material or the design of the retention device may allow to conduct a deformation to absorb at least a fraction of the impact energy.

It may be feasible to use a synthetic Aramide fibers, such as Kevlar or Twaron, or other suitable fibers in a dry form. However, it is not ruled out to use an impact resistant metallic material. The advantages of suitable synthetic fibers lie in their heat resistance, which may be important for bleed air de-iced slats, their light weight, high strength-weight ratio, good impact resistance and shock absorbing characteristics, a high cut resistance, and the capability of easily producing ropes, strings, meshes or fabrics.

The retention device may be attached to an internal structure of the flow body, such as a stiffening structure, or side walls that delimit the flow body. It is arranged at a distance to the front skin to avoid abrasion due to vibrations during the operation of the aircraft, which would occur if the retention device would be flushly arranged on an interior side of the front skin. However, the distance should not exceed a certain measure in order to provide a retention effect as early as possible after the impact of a foreign object.

The dimensional extensions of the retention device may depend on the design of the flow body and its leading edge region. The retention device may comprise a surface-like shape. For example, its outer delimiting edges in an uninstalled state may be rectangular or trapezoidal. In an installed state, the distance to the leading edge may be constant in a spanwise direction along the cross-sectional profile contour. Hence, in the installed state, the retention device may also comprise a curved profile that extends along the leading edge in a spanwise direction.

In an advantageous embodiment, the retention device is pre-tensioned at least in a spanwise direction. Thus, the orientation and position of the at least one retaining device can be precisely set. A slackening of parts of the retention device or the retention device in total can be avoided. However, it may be advantageous to arrange the retention device in such a manner, that the flow body may easily conduct a thermal expansion with the retention device installed.

In a further advantageous embodiment, the retention device comprises a plurality of individual strings arranged in a distance to each other. The strings may be realized in a rope-like manner with a plurality of braided fibers to achieve a desired tensile strength. The strings are simple to manufacture and also simple to install, since substantially only two holes are required for attaching two opposite ends of the strings. If the strings are sufficiently thin they may also act as a cutting device that is capable of cutting an impinging object into at least two fractions. The kinetic energy of the individual fractions is much less than the total kinetic energy of the object right at the beginning of the impact. Still further, by cutting the object into fractions, the individual fractions are deflected from the original motion path, which leads to a wider distribution of the kinetic energy to be absorbed of the structure of the flow body. This allows to reduce the damage to the flow body.

Advantageously, the retention device comprises a mesh. The mesh may be created by a plurality of individual strings, which may be realized in a similar way as the strings mentioned above. As an alternative, the mesh may be created by a plurality of individual fibers or fiber bundles, which lead to a more fabric-like device. The mesh may be designed to conform the leading edge region of the flow body. It may comprise a number of intersections or nodes that is adapted to the dimensional extensions of the mesh. A close-meshed design may comprise a high effectivity. However, the density of the nodes that dimensions the mesh sizes may be selected to conform a predetermined minimum size of foreign objects that would lead to a rupture in the front skin.

Advantageously, the at least one retention device comprises at least one dampening element that is designed for absorbing impact energy. The retention device may exemplarily be coupled with a structure through the dampening elements. These may be directly attached to the structure and comprise connection means for holding the at least one retention device. Thus, if an object impinges onto the front skin and reaches the retention device, a force acts on the dampening elements, which then may already absorb a part of the energy. The at least one dampening element may preferably be made from an elastomeric material, such as polyurethane or synthetic rubber. The dampening element may also be resilient, to act as a spring. It may exemplarily be made from a metallic material. However, all known materials that serve for this purpose can be applied. The dampening element is not necessarily exposed to a tensile force. By leading a string of the retention device through the dampening element it may also be compressed.

In case the dampening element is resilient, it may be used for providing a pretensioning force for the retention device.

The flow body may further comprise a plurality of ribs, which are arranged at a distance to each other in the hollow space, wherein the at least one retention device is coupled with two neighboring ribs. The at least one retention device may thus be spanned up between the ribs. The installation position of the at least one retention device may thus easily be chosen and a plurality of strings or a similar arrangement may easily be distributed behind the front skin. The ribs may extend over a cross-sectional profile of the hollow space and preferably extend in a chordwise direction. The ribs and the front skin may preferably be attached to each other.

The ribs may comprise a plurality of openings for attaching the at least one retention device. The opening allows to thread strings or other components of the at least one retention device from one side of a rib through one of the openings, wherein it may then be fastened on the other side of the respective rib. Fastening may simply be conducted by a knot or by attaching an additional fastening device.

The leading-edge component may further comprise a spar arranged in the hollow space, wherein the at least one retention device is coupled with the spar. The spar is a part of an internal stiffening arrangement of the flow body. It may have a spanwise extension with a web and flanges on opposed sides of the web for attachment to the skins. It may be arranged substantially perpendicular to one of the front skin and the back skin. Preferably, the spar is arranged perpendicular to the front skin in the regions, where the spar is attached to the front skin. However, it may also be arranged parallel to a vertical axis of the aircraft, to which the flow body is coupled.

Preferably, the at least one retention device comprises a plurality of retention devices in a consecutive arrangement. The retention devices may exemplarily be arranged in a side-by-side arrangement in a spanwise direction. Two directly neighboring retention devices may share an attachment device, by which the retention devices are attached to an internal stiffening structure or other components. For example, if the retention devices are spanned up by neighboring ribs, sections of two neighboring retention devices may be attached to the same rib.

The invention further relates to a wing for an aircraft, having a leading-edge component according to the above description.

The wing may further comprise a fixed leading edge, wherein the leading-edge component is movable between a retracted position directly forward the fixed leading-edge and at least one extended position at a further distance to the fixed leading edge.

The invention still further relates to an aircraft having at least one wing according to the above or at least one leading-edge component according to the above description.

### BRIEF DESCRIPTION OF THE DRAWINGS

Other characteristics, advantages and potential applications of the present invention result from the following description of the exemplary embodiments illustrated in the figures. In this respect, all described and/or graphically illustrated characteristics also form the object of the invention individually and in arbitrary combination regardless of their composition in the individual claims or their references to other claims. Furthermore, identical or similar objects are identified by the same reference symbols in the figures.
Figs. 1a, 1b and 2 show an exemplary embodiment of a leading-edge component in a schematic sectional view.
Fig. 3 shows an exemplary embodiment of a leading-edge component in a schematic lateral sectional view.
Fig. 4 shows an exemplary embodiment of a leading-edge component in a schematic lateral sectional view.
Fig. 5 shows an exemplary embodiment of a leading-edge component in a schematic lateral sectional view.
Figs. 6a and 6b show exemplary embodiments of retention devices with different mesh setups.
Fig. 7 shows another exemplary embodiment of a leading-edge component in a schematic top sectional view.
Figs. 8a to 8c show exemplary arrangements of multiple retention devices in schematic top sectional views.
Fig. 9 shows an aircraft.

### DETAILED DESCRIPTION OF EXEMPLARY EMBODIMENTS

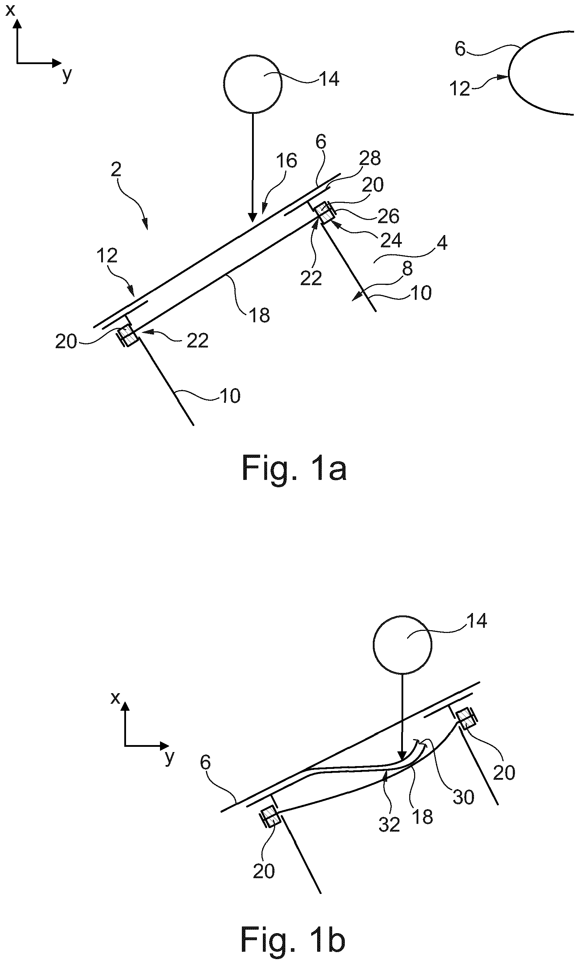

Fig. 1a shows a schematic sectional view of a part of a leading-edge component 2 for an aircraft. Here, the leading-edge component 2 comprises at least a part of a flow body 4 having a front skin 6 and a hollow space 8, which is at least partially enclosed by the front skin 6. Exemplarily, two ribs 10 are arranged in the hollow space 8 and are attached to the front skin 6. The front 6 comprises a curved shape with a leading edge 12. Exemplarily, as indicated by the coordinate system in the drawing plane on the top left, the leading edge 12 is swept back. The flow body 4 may thus be a part of a swept back wing of a commercial aircraft. The ribs 10 extend in a chordwise direction and are substantially arranged perpendicular to the leading edge 12.

In some situations, for example during take-off or landing of the aircraft, the front skin 6 may be hit by a foreign object 14, such as a bird. If this is the case, the front skin 6 deforms and the impact energy is at least partially absorbed during the deformation. With an increasing weight of the foreign object 14, the impact energy to be absorbed by the front skin 6 increases. Depending on an impact position 16, ruptures may occur in the front skin 6. If these are significant enough, the foreign object 14 may enter the hollow space 8. The energy absorption by the front skin 6 then stops. For avoiding this, a retention device 18 is spanned up between two neighboring ribs 10.

A retention device 18 may comprise surface-like dimensional extensions and is arranged in a distance to the front skin 6. It exemplarily extends along the front skin 6, preferably in a constant distance. In the case shown in Fig. 1a, the retention device 18 is attached to the ribs 10 through dampening elements 20, which provide a dampening function. They may comprise a cylindrical shape. The ribs 10 may comprise openings 22, through which at least a part of the respective retention device 18 is lead. The dampening elements 20 in this example also comprise a continuous borehole 24, through which the respective part of the retention device 18 is fed through. By providing a certain degree of pretension, the retention device 18 and the dampening elements 20 are fixed in their installation positions. For preventing the retention device 18 to slip back through the openings 22 and the boreholes 24, they are secured by separate attachment devices 26. The dampening elements 20 allow to absorb a part of the impact energy by being compressed.

In the example illustrated in Fig. 1a, the impact position 16 is directly adjacent to a flange 28 of a rib 10. By this, an excessive shearing force acts onto the front skin 6 during the impact, which leads to a rupture, if the impact load is high enough.

In Fig. 1b, the object 14 has created a rupture 30 into the front skin 6, such that a section 32 of the front skin 6 is torn out and folds inwardly. Here, it reaches onto the retention device 18, such that it does not fold further. The object 14 does not reach through the ruptures 30. Instead, it further deforms the front skin 6 in a further lateral direction. More kinetic energy can thus be absorbed. This is further supported by the dampening elements 20, which are compressed through the action on to the retention device 18.

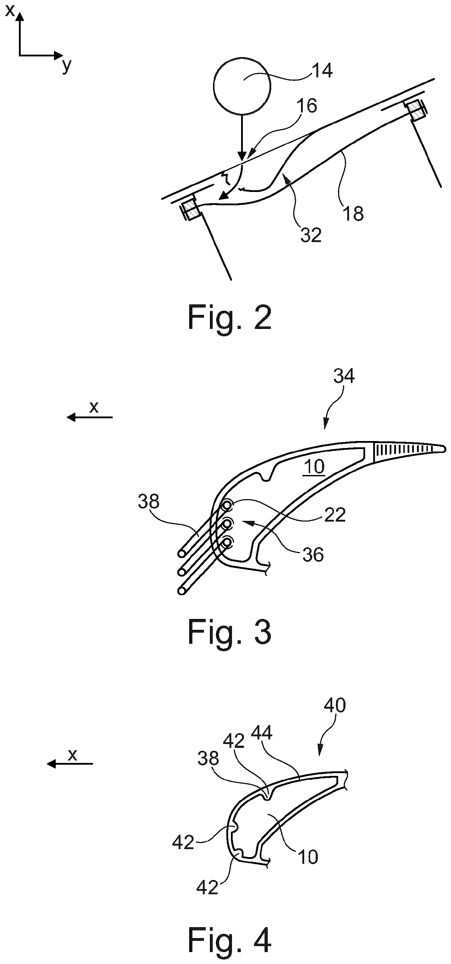

Fig. 2 shows a further effect based on another impact position 16 of the object 14. Here, also a section 32 of the front skin 6 folds inwardly and reaches the retention device 18. In doing so, the object 14 is deflected into a further lateral motion, which avoids the object 14 entering further into the hollow space 8.

In Fig. 3 another exemplary embodiment of a leading-edge component 34 is shown. Here, a retention device 36 is shown, which comprises a plurality of parallelly arranged strings 38. They are all fed through openings 22 of neighboring ribs 10.

In Fig. 4, a leading-edge component 40 is illustrated, which comprises a plurality of cutouts 42 at a forward edge 44 of a rib 10, where strings 38 reach through.

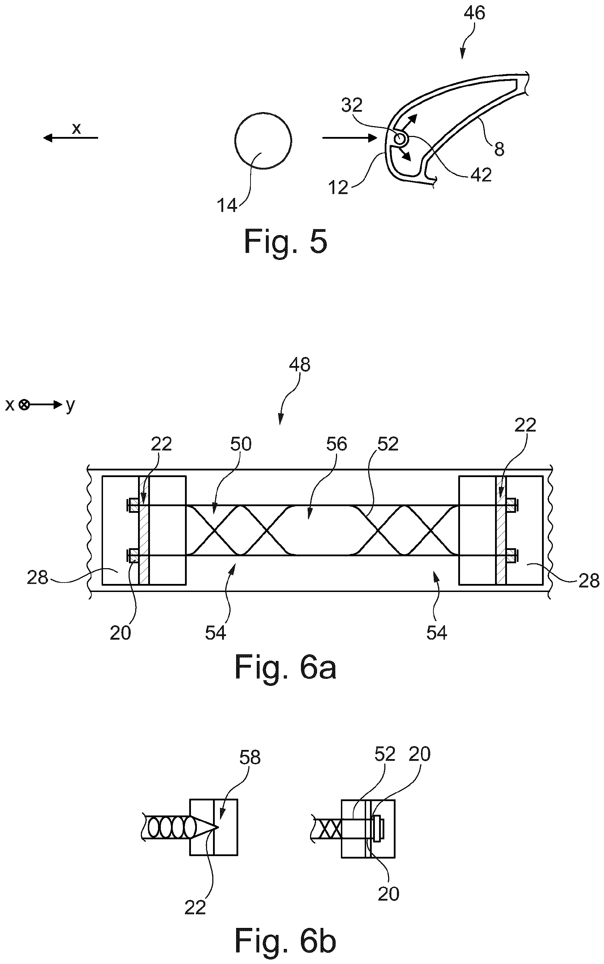

Fig. 5 shows a leading-edge component 46 with a single cutout 42, through which a single string 38 extends. The cutout 42 is arranged directly behind the front skin 6 and in the vicinity of the leading edge 12. An object 14 that impinges onto the leading-edge component 46 may be divided or split into several parts that are deflected and thus travel on different motion paths into the hollow space 8. The individual kinetic energies of the separate parts are clearly less than the original kinetic energy of the object 14.

Fig. 6a shows a leading-edge component 48 with a retention device 50 that comprises a plurality of strings 52, which are combined to form a mesh. In some sections 54, the mesh comprises a higher density than in other sections 56. For example, in sections 50 and 52 directly adjacent to flanges 28, the mesh has a higher density, since more likely ruptures occur there.

Since the retention device 50 is based on strings 52, ends of the strings 52 may be fed through openings 22 of ribs 10 and through dampening elements 20 that follow directly behind the openings 22. As shown in Fig. 6b, other alternative connections are possible. In figure 6b, two strings 52 are combined to form a single end 58, that is fed through a single opening 22 of a rib 10. In an alternative connection, a string 52 is fed through two neighboring openings 20 of a rib 10 subsequently, such as with a shoelace.

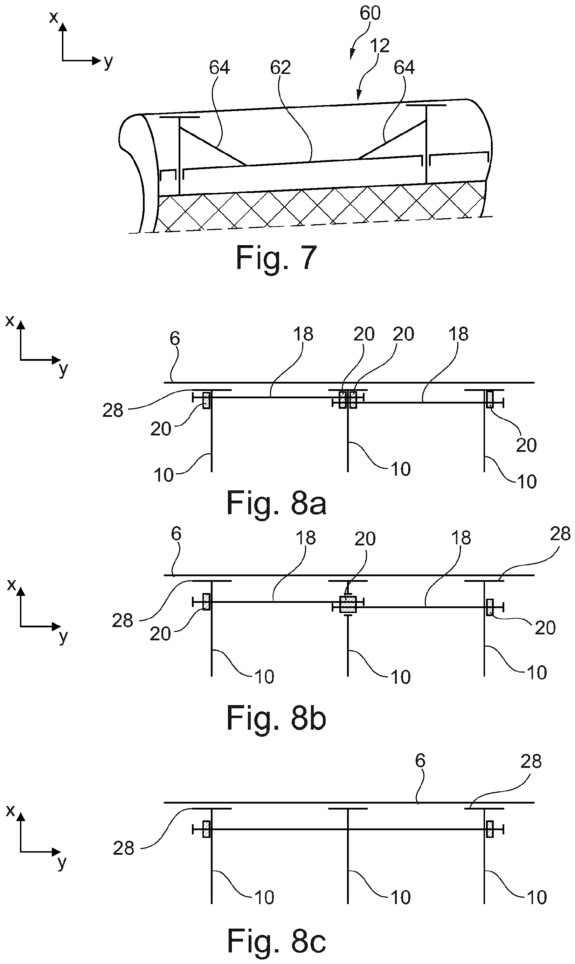

In Fig. 7, a leading-edge component 60 is shown, which additionally comprises a spar 62, that is arranged at a distance to the leading edge 12. Here, retention devices 64 are arranged with a non-constant distance to the leading edge 12 and extending at an angle to the leading edge 12 from ribs 10 to the spar 62.

In Figs. 8a, 8b and 8c a plurality of retention devices 18 or retention devices 18 that extend through several ribs 10 is illustrated. In Fig. 8a, two neighboring retention devices 18 extend through a pair of dampening elements 20 arranged on two opposed sides of a rib 10. In the drawing plane, one of the retention devices 18 extends to the left to a left rib 10, while the other one extends to the right and is attached to a right rib 10.

In Fig. 8b, an enlarged single dampening element 20 is arranged on the rib 10 in the middle, while both retention devices 18 extend through the enlarged dampening element 20 and extend to the right and the left as in Fig. 8a.

In Fig. 8c, an enlarged retention device 18 extends through the rib 10 in the middle and is fed through two laterally arranged dampening elements 20.

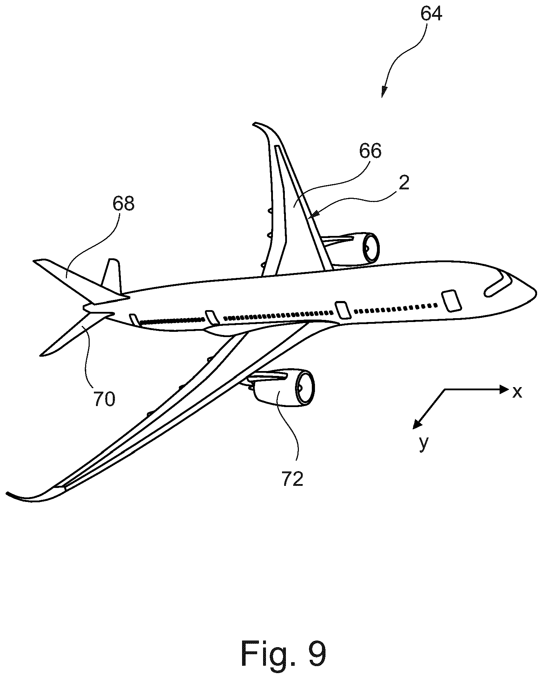

Fig. 9 shows an aircraft 64 having wings 66, which exemplarily comprise leading-edge components 2 according to Fig. 1. Also, leading-edge components 34, 40, 46, 48 or 60 may be used. A vertical tail plane 68, horizontal tail planes 70 or engines 72 may be equipped with at least one of the above explained leading-edge component.

In addition, it should be pointed out that "comprising" does not exclude other elements or steps, and "a" or "an" does not exclude a plural number. Reference characters in the claims are not to be interpreted as limitations.

### REFERENCE NUMERALS

- 2: leading-edge component
- 4: flow body
- 6: front skin
- 8: hollow space
- 10: rib
- 12: leading edge
- 14: foreign object
- 16: impact position
- 18: retention device
- 20: dampening element
- 22: opening
- 24: borehole
- 26: attachment device
- 28: flange
- 30: rupture
- 32: section
- 34: leading-edge component
- 36: retention device
- 38: string
- 40: leading-edge component
- 42: cutout
- 44: forward edge
- 46: leading-edge component
- 48: leading-edge component
- 50: retention device
- 52: string
- 54: section
- 56: section
- 58: single end
- 60: leading-edge component
- 62: spar
- 64: aircraft
- 66: wing
- 68: vertical tail plane
- 70: horizontal tail plane
- 72: engine

## Claims

1. A leading-edge component (2, 34, 40, 46, 48, 60) for an aircraft (64), comprising at least a part of a flow body (4) having a front skin (6), a hollow space (8) at least partially delimited by the front skin (6) and at least one separate retention device (18, 36, 50),
wherein the at least one retention device (18, 36, 50) comprises a flexible structure with a mesh, a web, a fabric or a plurality of strings, and
wherein the retention device (18, 36, 50) is arranged behind the front skin (6) in a distance thereto and extends along a main extension direction of at least a section of the front skin (6),
**characterized in that** the retention device (18, 36, 50) is designed for retaining the front skin (6) that deforms to move into the hollow space (8) upon an impact of a foreign object (14).

2. The leading-edge component (2, 34, 40, 46, 48, 60) of claim 1,
wherein the retention device (18, 36, 50) is pre-tensioned at least in a spanwise direction.

3. The leading-edge component (2, 34, 40, 46, 48, 60) according to claim 1 or 2,
wherein the retention device (18, 36, 50) comprises a plurality of individual strings (38, 52) arranged in a distance to each other.

4. The leading-edge component (2, 34, 40, 46, 48, 60) according to any of the preceding claims,
wherein the retention device (18, 36, 50) comprises a mesh.

5. The leading-edge component (2, 34, 40, 46, 48, 60) according to any of the preceding claims,
wherein the at least one retention device (18, 36, 50) comprises at least one dampening element (20) that is designed for absorbing impact energy.

6. The leading-edge component (2, 34, 40, 46, 48, 60) according to any of the preceding claims,
further comprising a plurality of ribs (10), which are arranged at a distance to each other in the hollow space (8),
wherein the at least one retention device (18, 36, 50) is coupled with two neighboring ribs (10).

7. The leading-edge component (2, 34, 40, 46, 48, 60) according to claim 6,
wherein the ribs (10) comprise a plurality of openings (22) for attaching the at least one retention device (18, 36, 50).

8. The leading-edge component (2, 34, 40, 46, 48, 60) according to any of the preceding claims,
further comprising a spar (62) arranged in the hollow space (8),
wherein the at least one retention device (18, 36, 50) is coupled with the spar (62).

9. The leading-edge component (2, 34, 40, 46, 48, 60) according to any of the preceding claims,
wherein the at least one retention device (18, 36, 50) comprises a plurality of retention devices (18, 36, 50) in a consecutive arrangement.

10. A wing for an aircraft, having a leading-edge component (2, 34, 40, 46, 48, 60) according to any of the preceding claims.

11. The wing according to claim 10,
further comprising a fixed leading edge,
wherein the leading-edge component (2, 34, 40, 46, 48, 60) is movable between a retracted position directly forward the fixed leading-edge and at least one extended position at a further distance to the fixed leading edge.

12. An aircraft having at least one wing of claim 10 or 11 or at least one leading-edge component (2, 34, 40, 46, 48, 60) according to any of the claims 1 to 9.

## Patentansprüche

1. Vorderkantenkomponente (2, 34, 40, 46, 48, 60) für ein Flugzeug (64), umfassend zumindest einen Teil eines Strömungskörpers (4) mit einer vorderen Haut (6), einen Hohlraum (8), zumindest teilweise begrenzt durch die vordere Haut (6), und zumindest eine separate Rückhaltevorrichtung (18, 36, 50),
wobei die zumindest eine Rückhaltevorrichtung (18, 36, 50) eine flexible Struktur mit einem Netz, einem Gewebe, einem Geflecht oder mehreren Schnüren umfasst, und wobei die Rückhaltevorrichtung (18, 36, 50) hinter der vorderen Haut (6) in einem Abstand dazu angeordnet ist und sich entlang einer Hauptausdehnungsrichtung zumindest eines Abschnitts der vorderen Haut (6) erstreckt,
**dadurch gekennzeichnet, dass** die Rückhaltevorrichtung (18, 36, 50) ausgestaltet ist zum Zurückhalten der vorderen Haut (6), die sich verformt, um sich bei Auftreffen eines fremden Objekts (14) in den Hohlraum (8) zu bewegen.

2. Vorderkantenkomponente (2, 34, 40, 46, 48, 60) nach Anspruch 1,
wobei die Rückhaltevorrichtung (18, 36, 50) zumindest in einer spannweitigen Richtung vorgespannt ist.

3. Vorderkantenkomponente (2, 34, 40, 46, 48, 60) nach Anspruch 1 oder 2,
wobei die Rückhaltevorrichtung (18, 36, 50) mehrere einzelne Schnüre (38, 52) umfasst, die in einem Abstand zueinander angeordnet sind.

4. Vorderkantenkomponente (2, 34, 40, 46, 48, 60) nach einem der vorhergehenden Ansprüche,
wobei die Rückhaltevorrichtung (18, 36, 50) ein Netz umfasst.

5. Vorderkantenkomponente (2, 34, 40, 46, 48, 60) nach einem der vorhergehenden Ansprüche,
wobei die zumindest eine Rückhaltevorrichtung (18, 36, 50) zumindest ein Dämpfungselement (20) umfasst, das ausgestaltet ist zum Absorbieren von Aufprallenergie.

6. Vorderkantenkomponente (2, 34, 40, 46, 48, 60) nach einem der vorhergehenden Ansprüche,
ferner umfassend mehrere Rippen (10), die in einem Abstand zueinander im Hohlraum (8) angeordnet sind,
wobei die zumindest eine Rückhaltevorrichtung (18, 36, 50) mit zwei benachbarten Rippen (10) gekoppelt ist.

7. Vorderkantenkomponente (2, 34, 40, 46, 48, 60) nach Anspruch 6,
wobei die Rippen (10) mehrere Öffnungen (22) zum Befestigen der zumindest einen Rückhaltevorrichtung (18, 36, 50) umfassen.

8. Vorderkantenkomponente (2, 34, 40, 46, 48, 60) nach einem der vorhergehenden Ansprüche,
ferner umfassend einen im Hohlraum (8) angeordneten Holm (62), wobei die zumindest eine Rückhaltevorrichtung (18, 36, 50) mit dem Holm (62) gekoppelt ist.

9. Vorderkantenkomponente (2, 34, 40, 46, 48, 60) nach einem der vorhergehenden Ansprüche,
wobei die zumindest eine Rückhaltevorrichtung (18, 36, 50) mehrere Rückhaltevorrichtungen (18, 36, 50) in einer aufeinander folgenden Anordnung umfasst.

10. Flügel für ein Flugzeug mit einer Vorderkantenkomponente (2, 34, 40, 46, 48, 60) nach einem der vorhergehenden Ansprüche.

11. Flügel nach Anspruch 10,
ferner umfassend eine feste Vorderkante,
wobei die Vorderkantenkomponente (2, 34, 40, 46, 48, 60) zwischen einer eingefahrenen Position direkt vor der festen Vorderkante und zumindest einer ausgefahrenen Position in einem größeren Abstand zur festen Vorderkante bewegbar ist.

12. Flugzeug mit zumindest einem Flügel nach Anspruch 10 oder 11 oder zumindest einer Vorderkantenkomponente (2, 34, 40, 46, 48, 60) nach einem der Ansprüche 1 bis 9.

## Revendications

1. Composante de bord d'attaque (2, 34, 40, 46, 48, 60) pour aéronef (64), comprenant au moins une partie d'un corps d'écoulement (4) ayant un revêtement avant (6), un espace creux (8) au moins partiellement délimité par le revêtement avant (6) et au moins un dispositif de rétention séparé (18, 36, 50),
l'au moins un dispositif de rétention (18, 36, 50) comprenant une structure souple avec un maillage, une bande, un tissu ou une pluralité de cordons, et
le dispositif de rétention (18, 36, 50) étant agencé derrière le revêtement avant (6) à distance de ce dernier et s'étendant le long d'une direction d'extension principale d'au moins une section du revêtement avant (6),
**caractérisé en ce que** le dispositif de rétention (18, 36, 50) est conçu pour maintenir le revêtement avant (6) qui se déforme pour se déplacer dans l'espace creux (8) en cas d'impact d'un objet étranger (14).

2. Composante de bord d'attaque (2, 34, 40, 46, 48, 60) selon la revendication 1,
dans laquelle le dispositif de rétention (18, 36, 50) est précontraint au moins dans une direction de l'envergure.

3. Composante de bord d'attaque (2, 34, 40, 46, 48, 60) selon la revendication 1 ou la revendication 2,
dans laquelle le dispositif de rétention (18, 36, 50) comprend une pluralité de cordons individuels (38, 52) agencés à distance les uns des autres.

4. Composante de bord d'attaque (2, 34, 40, 46, 48, 60) selon l'une quelconque des revendications précédentes,
dans laquelle le dispositif de rétention (18, 36, 50) comprend un maillage.

5. Composante de bord d'attaque (2, 34, 40, 46, 48, 60) selon l'une quelconque des revendications précédentes,
dans laquelle l'au moins un dispositif de rétention (18, 36, 50) comprend au moins un élément d'amortissement (20) qui est conçu pour absorber l'énergie d'impact.

6. Composante de bord d'attaque (2, 34, 40, 46, 48, 60) selon l'une quelconque des revendications précédentes,
comprenant en outre une pluralité de nervures (10), qui sont agencées à distance les unes des autres dans l'espace creux (8),
dans laquelle l'au moins un dispositif de rétention (18, 36, 50) est couplé à deux nervures voisines (10).

7. Composante de bord d'attaque (2, 34, 40, 46, 48, 60) selon la revendication 6,
dans laquelle les nervures (10) comprennent une pluralité d'ouvertures (22) pour attacher l'au moins un dispositif de rétention (18, 36, 50).

8. Composante de bord d'attaque (2, 34, 40, 46, 48, 60) selon l'une quelconque des revendications précédentes,
comprenant en outre un longeron (62) agencé dans l'espace creux (8), dans laquelle le au moins un dispositif de rétention (18, 36, 50) est couplé au longeron (62).

9. Composante de bord d'attaque (2, 34, 40, 46, 48, 60) selon l'une quelconque des revendications précédentes,
dans laquelle l'au moins un dispositif de rétention (18, 36, 50) comprend une pluralité de dispositifs de rétention (18, 36, 50) dans un agencement consécutif.

10. Aile pour aéronef, ayant une composante de bord d'attaque (2, 34, 40, 46, 48, 60) selon l'une quelconque des revendications précédentes.

11. Aile selon la revendication 10,
comprenant en outre un bord d'attaque fixe,
dans laquelle la composante de bord d'attaque (2, 34, 40, 46, 48, 60) est mobile entre une position rétractée directement vers l'avant du bord d'attaque fixe et au moins une position déployée à une distance plus grande du bord d'attaque fixe.

12. Aéronef ayant au moins une aile selon la revendication 10 ou la revendication 11 ou au moins une composante de bord d'attaque (2, 34, 40, 46, 48, 60) selon l'une quelconque des revendications 1 à 9.
